# EUROPÄISCHE PATENTSCHRIFT

(11) **EP 2 603 452 B1**
(45) Veröffentlichungstag und Bekanntmachung des Hinweises auf die Patenterteilung: **01.03.2017**
(21) Anmeldenummer: 11782367.4
(22) Anmeldetag: 29.07.2011
(51) Int. Cl.: C01B 11/02, C01B 11/10

(54) **STABILISIERTES CHLORIT-REAGENZ UND DAMIT HERGESTELLTE FESTSTOFFMISCHUNG FÜR DIE ClO2-ERZEUGUNG**
STABILIZED CHLORITE REAGENT AND SOLID MIXTURE PRODUCED THEREWITH FOR CLO2 GENERATION
RÉACTIF CHLORITE STABILISÉ ET MÉLANGE SOLIDE PRÉPARÉ AU MOYEN DE CELUI-CI POUR LA PRODUCTION DE CIO2

(30) Priorität: 13.08.2010 DE 102010034392
(43) Veröffentlichungstag der Anmeldung: 19.06.2013
(73) Patentinhaber: Khalaf, Hosni, 30900 Wedemark (DE)
(72) Erfinder: Khalaf, Hosni, 30900 Wedemark (DE)
(74) Vertreter: Lins, Martina
(86) Internationale Anmeldenummer: PCT/DE2011/001527
(87) Internationale Veröffentlichungsnummer: WO 2012/019587

(56) Entgegenhaltungen:
- DE-A1- 19 518 464
- DE-A1-102006 034 456
- US-A1- 2006 178 445
- US-A1- 2008 299 066

## Beschreibung

Die Erfindung betrifft ein stabilisiertes Chlorit-Reagenz in Form einer Feststoffmischung, die wenigstens ein Chlorit enthält. Ferner betrifft die Erfindung eine mit dem stabilisierten Reagenz durch Vermischen gebildete Feststoffmischung zur Erzeugung von Chlordioxid bei Inkontaktbringen der trockenen Mischung mit Wasser.

Chlordioxid (ClO₂) ist eine bei Raumtemperatur gasförmige, chemische Verbindung, die zum Bleichen und Desinfizieren sowie allgemein als Oxidationsmittel verwendet werden kann. Da Chlordioxid unter bestimmten Bedingungen explodieren kann, wird es - oft anstelle von Chlor - vor Ort frisch hergestellt. Hierfür haben sich verschiedene Verfahren etabliert.

Die Darstellungsverfahren gehen entweder von Chlorat (ClO₃⁻) oder Chlorit (ClO₂-) aus. Produkte höherer Reinheit erhält man mit Chlorit, das als Chlordioxid-Precursor betrachtet werden kann. Die vorliegende Erfindung beschäftigt sich speziell mit Verfahren für die Wasseraufbereitung, die Chlorit als Ausgangsstoff verwenden. Dabei sollen besonders solche Verfahren im Vordergrund stehen, die eine direkte Wasseraufbereitung ermöglichen, d.h. die Zugabe der Chlordioxid-Lösung oder des trockenen Mittels direkt zu dem zu behandelnden Wasser.

Die Gewinnung von Chlordioxid aus Chlorit erfolgt generell mit Oxidationsmitteln und/oder mit Säure oder Säureanhydriden. Um Nebenprodukte zu minimieren und die Explosionsgefahr zu verringern, werden die Reagenzien in technischen Anlagen unter kontrollierten Bedingungen zudosiert. Diese Verfahren sind aufwändig in der Handhabung und können beispielsweise für die Wasserbehandlung im kleinen Maßstab oder an entlegenen Orten ökonomisch und praktisch nicht sinnvoll eingesetzt werden. Man ist daher seit langer Zeit bemüht, Verfahren für die Chlordioxiderzeugung aus stabilen, lagerfähigen Vorstufen zu entwickeln, bei denen Reagenzien in fester Form eingesetzt werden, ohne dass eine aufwändige verfahrenstechnische Maßnahme erforderlich wäre.

Die US 2,071,091 A (Mathieson) beschreibt eine trockene Zusammensetzung aus Chlorit und fester Säure, z. B. Natriumsilicofluorid, Borsäure, sauren Phosphaten oder Sulfaten als fungicide und bactericide Mittel in der Wäscherei. Diese trockenen Zusammensetzungen sind nicht sehr lagerstabil. Es wird fortlaufend wenig ClO₂ aus ihnen entwickelt.

Die US 2,482,891 (Mathieson) beschreibt eine zum Bleichen verwendete Zusammensetzung. Dabei handelt es sich um eine feste Zusammensetzung aus einem Chlorit, einem Säureanhydrid und einem Verdünnungsmittel in Form eines anorganischen Salzes wie z. B. Natriumcarbonat, Natriumphosphat oder dergleichen. Als Trockenmittel kann Natriummonooxid vorhanden sein. Die als Verdünnungsmittel angegebenen Salze und die Reagenzien können die Entwicklung von Chlordioxid nicht verhindern, die Handhabung dieser Mittel ist gefährlich.

Die EP 694 14 616 T2 (Southwest Research Inst) beschreibt eine Zusammensetzung zur Erzeugung von ClO₂, bei der Chlorit einerseits und ein Anhydrid andererseits in zwei getrennten unverträglichen Phasen vorliegen. Die Phasen werden innig vermischt, die Reaktion setzt jedoch erst bei Inkontaktbringen mit Wasserdampf ein. Die Reagenzien sind für einfache Anwendungen zu kostspielig und für die direkte Wasseraufbereitung nicht geeignet.

Die US 4,547,381 A (Rio Linda) beschreibt eine ausschließlich aus trockenen Grundsubstanzen hergestellte trockene Zusammensetzung für die Erzeugung gasförmigen Chlordioxids, die ein Chlorit, ein inertes Verdünnungsmilieu, z. B. Diatomeenerde, und ein trockenes Reagens, das mit Chlorit zusammen Chlordioxid erzeugt, enthält. Das trockene Reagens für die Reaktion mit Chlorit ist entweder eine Säure oder ein Oxidationsmittel. Die trockene Mischung gibt kontinuierlich Chlordioxid ab. Es ist vorgesehen, dass die Mischung vor Benutzung aus trockenen Stoffen frisch hergestellt wird und dass das ClO₂, beispielsweise mit einem Argon-Strom, ausgetrieben wird. Lagerfähige Reagenzien stellt die US 4,547,381 A nicht bereit.

Die Aufgabe der Erfindung besteht darin, eine längere Zeit lagerfähige Trockenmischung zur Verfügung zu stellen, die für die direkte Erzeugung von Chlordioxid nur bei Kontakt mit Wasser geeignet ist und die Nachteile im Stand der Technik vermeidet. Insbesondere soll das gesuchte Gemisch chemisch stabil, lagerfähig und ohne Schutzgas handhabbar sein. Es soll als Pulver ein gutes Freifließverhalten aufweisen und im Wesentlichen ohne Entmischungsneigung dosierbar sein Weiterhin soll die Mischung möglichst kompaktierbar und damit zu Tabletten oder dergleichen portionierbar sein, und sie soll gegen höhere Temperaturen beständig sein, um in heißen Klimazonen verwendet werden zu können.

Diese Aufgabe wird mit dem stabilisierten Chlorit-Reagenz nach Anspruch 1 und der dieses Chlorit-Reagenz enthaltenden Feststoffmischung nach Anspruch 5 gelöst. Vorteilhafte Weiterbildungen der Erfindung sind in den Unteransprüchen angegeben.

Gemäß einem ersten Aspekt der Erfindung wurde gefunden, dass ein festes, trockenes Chlorit in einer Mischung mit einer festen

Die US 2008/0299066 A1 beschreibt eine Zusammensetzung für die energiegesteuerte Erzeugung und Freisetzung wenigstens eines Gases, das vorzugsweise ein Biozid ist. Die Zusammensetzung enthält daher einen durch Energie aktivierbaren Katalysator und weitere Inhaltsstoffe, die mit Hilfe des aktivierten Fotokatalysators ein Gas ergeben. Die Zusammensetzung kann vorzugsweise ein fotokatalytisch aktives Titandioxid (Rutil), ein Chlorit und Natriumhydroxid enthalten.

Die DE 195 18 464 A1 beschreibt ein Verfahren zur Herstellung stabilisierter Chlordioxid enthaltender Lösungen aus trockenen Ausgangsstoffen. Das Verfahren eignet sich insbesondere zur Aufbereitung und Entkeimung von Wasser, indem man eine Chlordioxidlösung durch Lösen eines Alkali- oder Erdalkalimetallchlorits und eines Metallperoxodisulfats in Wasser herstellt. Es werden verschiedene Verfahrensvarianten beschrieben.

Broensted-Base und einem hochdispersen Trennmittel aus nanoskaligen anorganisch-oxidischen Teilchen mit einer BET-Oberfläche zwischen 20 und 600 m²/g hervorragend stabilisiert werden kann.

Unter "nanoskaligen" Partikeln werden im Allgemeinen Partikel ab wenigen Nanometern und bis zu 500 nm mittlerem Durchmesser verstanden. Dies bezieht sich auf die Größe der Kristallit-Agglomerate bzw. der Agglomerate aus oxidischen Ketten bei polykondensierenden, d.h. kettenbildenden Sauerstoffsäuren.

Die oxidischen Teilchen des Trennmittels haben dabei vorzugsweise mittlere Durchmesser zwischen 5 nm und 40 nm, weiter vorzugsweise zwischen 5 nm und 100 nm, besonders bevorzugt zwischen 7 nm und 40 nm. Die BET-Oberflächen liegen erfindungsgemäß zwischen 20 und 600 m²/g und in bevorzugter Ausführungsform zwischen 150 und 600 m²/g.

Unter "anorganisch-oxidischen Teilchen" werden solche verstanden, die aus einer Struktur aus Metall- oder Halbmetalloxiden bestehen, wobei anstelle oxidischen Sauerstoffs auch in mehr oder weniger ausgeprägtem Maße OH-Gruppen vorhanden sein können. Im Rahmen dieser Erfindung sollen zu den anorganisch-oxidischen Teilchen auch modifizierte Teilchen zählen, bei denen beispielsweise Hydroxylgruppen an der Teilchenoberfläche mit Nucleophilen substituiert sind. Bevorzugt bestehen die anorganisch-oxidischen Teilchen des Trennmittels aus einem der folgenden Materialien oder einer Mischung hieraus: Oxide und OH-Gruppen tragende Oxide der Elemente Silicium, Zirkonium, Titan, Zink und Aluminium, insbesondere pyrogene Kieselsäure sowie nicht hydrophobiertes und hydrophobiertes Siliziumdioxid.

In bevorzugter Ausführungsform bestehen die anorganisch-oxidischen Teilchen des Trennmittels aus nanoskaligen Teilchen hochdispers gewonnener ganz oder teilweise kondensierter Metakieselsäure oder Polykieselsäure, weiter bevorzugt aus pyrogenem Siliciumdioxid, welches häufig auch als "pyrogene Kieselsäure" bezeichnet. wird. Das Siliciumdioxid kann chemisch modifiziert sein.

Das bei der Erfindung besonders bevorzugt verwendete pyrogene Siliciumdioxid (z. B. Aerosil®, Degussa) wird durch Flammenhydrolyse von gasförmigem Siliciumtetrachlorid erhalten und fällt als extrem feinteiliges Pulver an. Pyrogenes Siliciumdioxid ist bei trockener Lagerung fast wasserfrei. Der SiO₂-Gehalt liegt bei über 99,5 %. Aufgrund der hohen spezifischen Oberfläche treten im Kontakt mit anderen Stoffen vermehrt elektrophysikalische und elektrochemische Grenzflächenphänomene auf.

Die Behandlung von pulverigem Natriumchlorit mit beispielsweise pyrogenem Siliciumdioxid führt zu spontaner und angeregter Chlordioxiderzeugung. Hochdisperses Siliciumdioxid kann demnach allein nicht für die Verbesserung der Fließfähigkeit und Lagerstabilität von Natriumchlorit eingesetzt werden. Ohne Zusatz einer starken Base wird auch die Reaktion zwischen Chlorit und anderen Bestandteilen, die der Mischung noch zugesetzt werden, nicht verhindert, sondern durch hochdisperse oxidisch/hydroxidische Mineralien sogar noch beschleunigt.

Erst die Kombination der nanoskaligen anorganisch-oxidischen Teilchen mit der Broensted-Base führt zu einem Trennmittel, das das Chlorit wirksam stabilisiert und ein stabilisiertes, lagerfähiges und gut handhabbares Chlorit-Reagenz ergibt.

Es wurde beobachtet, dass sich das Volumen einer Mischung aus pyrogenem Siliziumdioxid und einer Broensted-Base, nämlich einem Alkalihydroxid, verglichen mit der Summe der Einzelvolumina der Komponenten vergrößert. Hieraus kann womöglich geschlossen werden, dass durch grenzflächenphysikalische Phänomene, die die Oberflächenladung der oxidischen Agglomerate beeinflussen, eine negativ geladene Schutzhülle um die Chlorit-Teilchen entsteht. Beispielsweise könnte angenommen werden, dass durch die Broensted-Base Protonen aus OH-Gruppen an der Oberfläche der anorganischen Teilchen abgezogen werden, bzw. deren Anlagerung unter teilweiser negativer Aufladung der Oberfläche verhindert wird. Die negative Aufladung der nanodispersen Teilchen bewirkt eine gegenseitige Abstoßung zwischen allen Teilchen einschließlich der Chlorit-Ionen, was die Volumenvergrößerung erklären könnte.

Speziell für das System Silciumdioxid gesprochen befinden sich Siloxan- und Silanol-Gruppen an der Oberfläche der Teilchen. Die Silanol-Gruppen haben einen amphotären Charakter. Der isoelektrische Punkt solcher Silanol-Gruppen liegt im Bereich 1 bis 3. Basenzugabe bewirkt eine Deprotonierung der Silanol-Grupen, die sich infolge dessen negativ aufladen. Die hierdurch bedingte gegenseitige Abstoßung der Siliciumdioxidpartikel hemmt die Bildung von großen Agglomeraten. Die Partikel reagieren nicht mehr sauer. Somit können sie keine Protonen an die Chloritionen abgeben. Eine Bildung von chloriger Säure, die zu Chlordioxid disproportionieren kann, ist unterbunden.

Zwar ist aus der DE 10 2006 034 456 A1 (Lödige) bereits ein Verfahren zur Stabilisierung reaktiver Stoffe bekannt, wobei eine Lösung des Stoffes mit Kieselgur oder einem anderen porösen inerten Träger (Diatomeenerde, Molekularsieb) vermischt und verknetet wird. Das Trägermaterial wird mit der Lösung des reaktiven Stoffes getränkt, wodurch dieser in der Struktur geschützt werden soll. Diese Systeme können jedoch ihr Volumen nicht erweitern und die durch Imprägnieren aufgebrachten Bestandteile nicht rundum schützen. Die Lagerstabilität eines so geschützten Chlorit-Reagenzes ist daher geringer als bei der Erfindung. Die Schwerlöslichkeit des Trägermaterials im Wasser erfordert eine nachhaltige Filtration bzw. Dekantieren.

Innerhalb des stabilisierten Chlorit-Reagenzes kann das Chlorit vorzugsweise ein Alkali- oder Erdaikali-Chlorit sein, besonders bevorzugt ein Natrium-, Kalium-, Calcium- oder Magnesium-Chlorit.

Die Broensted-Base ist bevorzugt ein stark basisches Hydroxid, insbesondere ein Alkalihydroxid. In besonders bevorzugter Ausführungsform werden Natriumhydroxid (NaOH) und/oder Kaliumhydroxid (KOH) verwendet.

Um eine Chlordioxid-Bildung aus dem stabilisierten Chlorit-Reagenz zu unterbinden, ist eine Mindestmenge an Base erforderlich, die bei ca. 1 bis 10 Milliäquivalent (Millimol/Wertigkeit der Base) je Gramm Chlorit liegt. Je Gramm oxidische Teilchen sind in dem Chlorit-Reagenz weiterhin vorzugsweise 100 bis 1000 mMol Chlorit vorhanden.

Gemäß einer besonders bevorzugten Ausführungsform besitzen die Chlorit-Teilchen und die Basenteilchen innerhalb der Chlorit-Reagenz-Mischung eine ähnliche Teilchengröße im Rahmen ± einer Zehnerpotenz des mittleren Teilchendurchmessers. Diese untereinander ähnliche Teilchengröße kann beispielsweise durch gemeinsames Vermahlen von Chlorit und Base oder von Chlorit, Base und oxidischen Teilchen herbeigeführt werden, oder es werden Ausgangsteilchen von ähnlichem Pulverisierungsgrad verwendet.

Ein zweiter Aspekt der Erfindung besteht darin, mit Hilfe des oben beschriebenen stabilisierten Chlorit-Reagenzs eine Feststoffmischung zur Erzeugung von Chlordioxid bei Inkontaktbringen der trockenen Mischung mit Wasser bereitzustellen.

Die erfindungsgemäße Feststoffmischung enthält das zuvor beschriebene stabilisierte Chlorit-Reagenz sowie weitere trockene Feststoffe, die mit dem Chlorit und Wasser unter Freisetzung von Chlordioxid reagieren.

Überraschenderweise wurde festgestellt, dass das Chlorit-Reagenz sowohl mit Oxidationsmitteln als auch Säuren kompatibel ist, ohne dass spontan Chlordioxid entstünde. Vielmehr erhält man eine äußerst lagerstabile und gut zu handhabende Feststoffmischung. Komplizierte Mehrkomponentensysteme, Mehrphasensysteme oder das Vermischen verschiedener Pulver vor Ort ist nicht mehr erforderlich.

Die Erklärungen für die erstaunlich gute Lagerstabilität der chemisch-inkompatiblen Bestandteile in diesem System sind vielfältig. Am plausibelsten ist die Bildung einer negativ geladenen monopartikulären Trennmittelschicht - vorzugsweise einer Siliziumdioxidschicht - um die Pulverteilchen der Bestandteile der Feststoffmischung, was mit abstoßenden elektrischen Kräften verbunden ist. Diese verhindern eine direkte Berührung der Bestandteile. Die beobachtete Volumenvergrößerung ist so ebenfalls erklärbar. Die chemische Stabilität der Systeme wird also vermutlich in erster Linie durch Umhüllen der Reaktanten mit den partiell negativ geladenen Oberflächen des Trennmittels bewirkt. Das teilweise negativ aufgeladene Trennmittel wirkt dabei als eine Art "Schutzkolloid".

Überraschenderweise sind sogar Mischungen, die neben Chlorit und Oxidationsmittel noch Säure, saures Salz oder Säureanhydrid zur pH-Regulierung und/oder ein Redoxsystem aus Oxidationsmittel und Redoxinitiator oder -Reduktionsmittel enthalten, stabil. Letztlich kann die Feststoffmischung neben dem stabilisierten Chlorit-Reagenz jede Reagenzienmischung aus Feststoffen beinhalten, die mit dem Chlorit ein reaktionsfähiges System zur Chlordioxid-Bildung ergibt. Die Mischungen sind über lange Zeit - gemessen wurden Zeiträume von wenigstens einem Vierteljahr - lagerstabil. In dieser Zeit konnte keine freie Chlordioxid-Entwicklung nachgewiesen werden.

Bevorzugt wird für die nanoskaligen Teilchen auch in der erfindungsgemäßen Feststoffmischung pyrogenes Siliciumdioxid verwendet. Das Siliciumdioxid und allgemein die nanoskaligen Teilchen finden sich zwischen den einzelnen Pulverpartikeln des Chlordioxid-Donator-Pulvers (pulveres mixti), bzw. der das Chlorit-Reagenz enthaltenden Feststoffmischung, umhüllen und trennen die Bestandteile. Die ansonsten inkompatiblen Stoffe, die sofort miteinander reagieren würden, können so separiert werden. Durch das Trennmittel wird verhindert, dass sich die Reaktanten der Feststoffmischung berühren. Die trockenen Bestandteile bleiben daher nebeneinander in derselben Mischung lagerstabil. Die nanoskaligen Teilchen wirken auch als Trockenmittel und binden evtl. an den Bestandteilen anhaftende Feuchtigkeit. Die hygroskopischen Bestandteile, die zur Verklumpung neigen, werden hierdurch aufgelockert. Überraschenderweise konnte bei diesem Gleichgewichtsvorgang keine Chlordioxid-Bildung beobachtet werden.

Die Feststoffmischung besitzt als Pulver eine gute Freifließfähigkeit.

Um aus der Feststoffmischung eine Chlordioxid-Lösung zu produzieren, wird die Feststoffmischung nur mit Wasser versetzt oder in Wasser einrieseln gelassen. Es kann sich dabei direkt um das zu behandelnde Wasser handeln, oder es wird zunächst eine Lösung aus einer bestimmten Menge Wasser und der Feststoffmischung hergestellt und diese Lösung wird danach dem zu behandelnden Wasser zugesetzt oder sonst in an sich bekannter Art und Weise als Chlordioxid-Reagenz verwendet.

Hervorzuheben ist, dass die Feststoffmischung bei Zusatz von Wasser viel reaktiver ist, d.h. schneller reagiert, als bei Zugabe einer entsprechender Menge der für die Reaktion erforderlichen Ausgangsreagenzien allein. Dies ist bedingt durch katalytische Oberflächeneffekte des hochdispersen Trennmittels. Die Trennmitteloberfläche nimmt durch Adsorptions- und Desorptionsprozesse an der Reaktion teil und verändert so die Kinetik in Richtung einer Reaktionsbeschleunigung.

In bevorzugten Ausführungsformen enthält die Feststoffmischung für die Chlordioxid-Erzeugung neben dem Chlorit-Reagenz wenigstens eine Säure, wenigstens ein Säureanhydrid und/oder wenigstens ein Oxidationsmittel, Reduktionsmittel oder Redox-System, jeweils in fester Form und gegebenenfalls Zusatz und Hilfsstoffe.

Es können alle bekannten Feststoffsysteme, die Chlordioxid aus Feststoffen mit Wasser freisetzen können, für die Feststoffmischung nach der Erfindung genutzt werden. Selbst wenn das Wasser für die eigentliche Chlordioxidbildung nicht benötigt würde, kann es als Lösungsmittel dienen, um die in der Feststoffmischung wirkungsvoll separierten Bestandteile für die Reaktion zueinander zu bringen.

Das Chlorit-Säure-Verfahren lässt sich allgemein durch folgende Gleichung beschreiben:

I) 5 ClO⁻₂ + 4 H+ -→ 4 ClO₂ + Cl⁻ + 2 H₂O

Es lässt sich auch mit trockenen, beispielsweise anorganischen oder organischen Säuren oder mit trockenen Säureanhydriden, die bei Kontakt mit Wasser sofort in die Säuren umgewandelt werden, durchführen. Geeignet sind als Säuren z. B. Natriumhydrogensulfat, Zitronensäure oder Oxalsäure, als Anhydride z. B. Maleinsäureanhydrid oder Phthalsäureanhydrid. Bekannte Verfahren, die mit diesen Systemen arbeiten, lassen sich für die Erfindung sehr einfach nutzen, indem lediglich das Chlorit als stabilisiertes Chlorit-Reagenz - wie oben beschrieben - eingesetzt wird. Alle Komponenten bilden dann gemeinsam eine Feststoffmischung nach dieser Erfindung.

Weiterhin sind zahlreiche Reaktionssysteme für die Herstellung von Chlordioxid aus Chlorit mit Oxidationsmitteln bekannt. Hiervon können alle die Verfahren genutzt werden, die von Oxidationsmitteln in Feststoffform ausgehen.

Die deutsche Trinkwasserverordnung regelt in § 11 in Verbindung mit der Substanzliste des Bundesministeriums für Gesundheit, welche Substanzen und Verfahren für die Trinkwasserdesinfektion zugelassen sind. Hierunter ist unter anderem die Herstellung von Chlordioxid aus Peroxomonosulfat und Peroxodisulfat gemäß folgender Gleichungen:

II) 2ClO₂⁻ + HSO₅⁻ + H⁺ → 2 ClO₂ + SO₄²⁻ + H₂O

III) 2 ClO₂⁻ + S₂O₈²⁻ → 2 ClO₂ + 2 SO₄²⁻

Dabei entsteht lediglich Sulfat, das auch natürlich in Trinkwasser vorkommt. Die Reaktion III findet im Gegensatz zu Reaktion II langsam statt, wird jedoch - wie oben beschrieben - durch das neue Chlorit-Reagenz beschleunigt.

In der Feststoffmischung kann weiterhin vorzugsweise wenigstens ein zusätzliches Salz vorhanden sein, insbesondere ausgewählt aus der Gruppe: Salze mit Anionen oder Kationen, die in Bestandteilen der Feststoffgrundmischung oder des Chlorit-Reagenzes vorkommen, Reduktionsmittel, insbesondere innerhalb von Redoxsystemen mit im Überschuss vorhandenen Oxidationsmitteln, Redox-Katalysatoren, Redox-Initiatoren (an der Redoxreaktion beteiligte Reaktionsauslöser), pH-regulierende saure oder basische Salze, puffernde Salze und Salzmischungen. Das zusätzliche Salz kann als Zusatzstoff angesehen werden.

Die Zusatzstoffe sind in der Regel dazu vorgesehen, die chemische Kinetik der Chlordioxid erzeugenden Reaktion zu beeinflussen. Zusatzstoffe können auch eine stabilisierende Wirkung besitzen, es können auch zusätzliche Desinfektionsmittel als Zusatzstoffe (z. B. Erdalkalihypochlorit, oder chlor- bzw. brombildende Stoffe) in das Chlordioxid-Erzeugungssystem integriert werden. Dies ist möglich, da alle Inhaltsstoffe durch das Trennmittel separiert und geschützt in der Mischung vorliegen.

Weiterhin kann die Feststoffmischung vorzugsweise zusätzlich Hilfsstoffe enthalten. Als Hilfsstoffe kommen beispielsweise anorganische Pigmente oder Farbstoffe in Frage, die z.B. die Behandlung des Wassers mit der Feststoffmischung oder die Feststoffmischung selber kenntlich machen.

Als besonders vorteilhaft wird es angesehen, wenn die Feststoffmischung neben dem Chlorit-Reagenz wenigstens ein Oxidationsmittel der Persulfat-Gruppe: Peroxomonosulfat (Triplesalz aus KHSO₅, KHSO₄ und K₂SO₄) Peroxodisulfat, Erdalkalihypochlorit (als Halogen-Donator) enthält.

Die zu wählenden stöchiometrischen Verhältnisse sind dem Fachmann bekannt und für die Verwendung der Systeme im Rahmen dieser Erfindung nicht anders zu wählen als sonst.

Als besonders vorteilhaft wird es im Sinne dieser Erfindung angesehen, wenn alle Feststoffteilchen außer den nanoskaligen Teilchen eine ähnliche Teilchengröße im Rahmen ± einer Zehnerpotenz des mittleren Teilchendurchmessers besitzen. Die Partikel der einzelnen Bestandteile der Feststoffmischung nach dieser Erfindung weisen nach ihrer Herstellung oder Zerkleinerung bei Lieferung als Grundstoff normalerweise eine unterschiedliche Korngröße und Form auf. Es ist vorteilhaft, wenn alle Bestandteile der Feststoffmischung - außer den nanoskaligen Teilchen - einen annähernd gleichen Zerkleinerungsgrad besitzen und gleichmäßig verteilt sind, was durch den gleichen Zerkleinerungsgrad erleichtert wird. Durch die gleichmäßige Teilchengröße, bzw. den einigermaßen einheitlichen Teilchendurchmesser, wird eine bessere Dosiergenauigkeit gewährleistet. Das Trennmittel verhindert das Zusammenklumpen der Bestandteile.

Die erfindungsgemäße Feststoffmischung kann als loses Pulver eingesetzt werden und weist gute Fließeigenschaften und eine gute Stabilität gegen Entmischung auf. Es kann besonders vorteilhaft sein, das Pulver mit einem Trockengutdosierer einzusetzen. Die Feststoffmischung wird dann beispielsweise mit Hilfe eines solchen Trockengutdosierers dem zu behandelnden Wasser direkt zugesetzt. An einem Ort, an dem häufig Chlordioxid benötigt wird, können mit Hilfe eines solchen Trockengutdosierers und Wasser stets frische wässrige Chlordioxid-Lösungen hergestellt werden.

Die erfindungsgemäßen Pulvermischungen lassen sich problemlos kompaktieren und tablettieren, so dass die Tabletten, Pellets, Granulate oder dergleichen eine einheitliche Zusammensetzung haben. Die Direktpressung bietet einige Vorteile gegenüber der Tablettierung nach vorausgegangener Granulierung. Es entfallen die Herstellung der Feuchtgranulate und die anschließende Wärmebelastung des Tablettiergutes durch Trocknung. Eine Feuchtgranulierung mit Wasser kann nicht angewandt werden, da eine Chlordioxidentwicklung unausweichlich wäre.

Im Einzelnen werden für die Erfindung folgende Reaktionssysteme als besonders vorteilhaft angesehen:
1.) Eine Feststoffmischung aus Natriumchlorit, pyrogenem Siliciumdioxid, Natriumhydroxid, Natriumperoxodisulfat, Kaliumperoxomonosulfat und Natriumhydrogensulfat. Die Reaktion erfolgt nach der vereinfachten Gleichung:

   IV) 4 ClO₂⁻ + S₂O₈²⁻ + HSO₅⁻ + H⁺ → 4 ClO₂ + 3 SO₄²⁻ + H₂O

   Das stöchiometrische Verhältnis des Chlorits zu der Summe von Peroxodisulfat und Peroxomonosulfat muss optimal 2:1 sein.
   Neben dem stabilisierten Chlorit-Reagenz, das vorzugsweise aus Natriumchlorit, pyrogenem Siliciumdioxid und Natriumhydroxid besteht, kann die Feststoffmischung in bevorzugten Ausführungsformen folgende Bestandteile enthalten:
2.) Natriumperoxodisulfat, Triplesalz und Natriumhydrogensulfat; (besonders für eine beschleunigte Chlordioxid-Bildung).
3.) Triplesalz, Natriumhydrogensulfat und Natriumchlorid; (zur Herstellung chlorhaltiger Chlordioxid-Lösungen).
4.) Natriumperoxodisulfat und Natriumpyrosulfit (Zusatzstoff mit Doppelfunktion: Schutz gegen zu früh entwickeltes Chlordioxid durch Reduktion desselben, Redox-Initiator für Natriumperoxodisulfat);
5.) Natriumhydrogensulfat (als feste anorganische Säure);
6.) Natriumhydrogensulfat und Calciumhypochlorit; (zur Herstellung chlorhaltiger Chlordixoid-Lösungen).
   Und zur Herstellung bromhaltiger Chlordioxidlösungen:
7.) Kaliumbromid, Triplesalz und Natriumhydrogensulfat.

Im Folgenden wird die Erfindung anhand von Beispielen näher erläutert, die ausschließlich zur Illustration und zum besseren Verständnis der Erfindung dienen sollen. Mit Hilfe der vorstehend gegebenen allgemeinen Beschreibung kann der Fachmann aus den Beispielen weitere Beispiel selbst ableiten.

### Beispiel 1:

Stöchiometrische Mengen von kristallinem Natriumperoxodisulfat, Tripelsalz und Natriumhydrogensulfat werden mit einem äquivalenten stabilisiertem Chlorit-Reagenz, das aus pyrogenem Siliciumdioxid, Natriumchlorit und Natriumhydroxid besteht, gemischt, fein zerkleinert bzw. zermahlen und gesiebt. In geschlossenen Gebinden und bei trockener und kühler Lagerung kann die Mischung innerhalb von zwei Jahren nach der Produktion zur Herstellung von Chlordioxidlösungen durch einfaches Lösen in Wasser verarbeitet oder tablettiert werden. Auch können unmittelbar tablettierte Gemische als Tabletten gelagert werden.

### Beispiel 2:

Das freifließende einkomponentige ClO₂-Donator-Pulver aus Beispiel 1 wird mittels eines Trockengutdosierers in einen mit Wasser gefüllten Reaktor dosiert. Die Dosierung kann entweder volumetrisch oder gravimetrisch erfolgen.

Nach dem Ablauf der Reaktion stehen gebrauchsfertige Chlordioxidlösungen bestimmter Konzentrationen zur Verfügung.

## Patentansprüche

1. Stabilisiertes Chlorit-Reagenz in Form einer Feststoffmischung, die wenigstens ein Chlorit und wenigstens ein festes stark basisches Hydroxid enthält, **dadurch gekennzeichnet, dass** die Feststoffmischung weiterhin ein hochdisperses Trennmittel aus nanoskaligen anorganisch-oxidischen Teilchen mit einer BET-Oberfläche zwischen 20 und 600 m²/g beinhaltet, das aus pyrogenem Siliziumdioxid besteht.

2. Stabilisiertes Chlorit-Reagenz nach Anspruch 1, **dadurch gekennzeichnet, dass** das basische Hydroxid ein Alkalihydroxid ist.

3. Stabilisiertes Chlorit-Reagenz nach Anspruch 1 oder 2, **dadurch gekennzeichnet dass** je Gramm der oxidischen Teilchen 10 bis 1000 Milliäquivalent der Base und 100 bis 1000 mMol des Chlorits enthalten sind.

4. Stabilisiertes Chlorit-Reagenz nach einem der Ansprüche 1 bis 3, **dadurch gekennzeichnet, dass** die Chlorit-Teilchen und die Basenteilchen außer den nanoskaligen Teilchen eine ähnliche Teilchengröße im Rahmen ± einer Zehnerpotenz des mittleren Teilchendurchmessers besitzen.

5. Feststoffmischung zur Erzeugung von Chlordioxid (ClO₂) bei Inkontaktbringen der trockenen Mischung mit Wasser, wobei die Feststoffmischung das stabilisierte Chlorit-Reagenz gemäß einem der Ansprüche 1 bis 4 enthält, sowie weitere trockene Feststoffe, die mit dem Chlorit und Wasser unter Freisetzung von Chlordioxid reagieren.

6. Feststoffmischung nach Anspruch 5, **dadurch gekennzeichnet, dass** die Feststoffmischung neben dem Chlorit-Reagenz wenigstens eine Säure, wenigstens ein Säureanhydrid und/oder wenigstens ein Oxidationsmittel, Reduktionsmittel oder Redox-System jeweils in fester Form und gegebenenfalls Zusatz- und Hilfsstoffe enthält.

7. Feststoffmischung nach Anspruch 6, **dadurch gekennzeichnet, dass** als Zusatzstoffe wenigstens ein zusätzliches Salz vorhanden ist, insbesondere ausgewählt aus der Gruppe: Salze mit Anionen oder Kationen, die in Bestandteilen der Feststoffgrundmischung oder des Chlorit-Reagenzes vorkommen, Reduktionsmittel, Redox-Katalysatoren, Redox-Initiatoren, pH-regulierende saure oder basische Salze, puffernde Salze und Salzmischungen.

8. Feststoffmischung nach Anspruch 6, **dadurch gekennzeichnet, dass** als Hilfsstoffe anorganischen Farbpigmente oder organische Farbstoffe zugesetzt werden.

9. Feststoffmischung nach einem der Ansprüche 5 bis 8, **dadurch gekennzeichnet, dass** alle Feststoffteilchen außer den nanoskaligen Teilchen eine ähnliche Teilchengröße im Rahmen ± einer Zehnerpotenz des jeweiligen mittleren Teilchendurchmessers besitzen.

10. Feststoffmischung nach einem der Ansprüche 5 bis 9, **dadurch gekennzeichnet, dass** sie als lose Mischung oder in kompaktierter Form und insbesondere zu Tabletten verpresst vorliegt

11. Feststoffmischung nach einem der Ansprüche 5 bis 10, **dadurch gekennzeichnet, dass** sie wenigstens ein Oxidationsmittel der Peroxo-Gruppe:
Peroxomonosulfat (Tripelsalz aus KHSO₅, KHSO₄ und K₂SO₄), Peroxodisulfat oder Erdalkalihypochlorit, enthält.

12. Verfahren zur Herstellung von Chlordioxid-Lösungen, **dadurch gekennzeichnet, dass** die Feststoffmischung nach einem der Ansprüche 5 bis 11 mit Wasser vermischt wird, insbesondere einer Wassermenge portionsweise zugegeben oder zudosiert wird.

13. Verfahren zur Behandlung von Wasser mit Chlordioxid, **dadurch gekennzeichnet, dass** die Feststoffmischung nach einem der Ansprüche 5 bis 11 einer zu behandelnden Wassermenge portionsweise zugegeben oder zudosiert wird.

## Claims

1. Stabilized chlorite reagent in the form of a solids mixture which contains at least one chlorite and at least one solid strongly basic hydroxide, **characterized in that** the solids mixture further comprises a highly disperse release agent of nanoscale inorganic-oxidic particles having a BET surface area between 20 and 600 m²/g that consists of pyrogenic silicon dioxide.

2. Stabilized chlorite reagent according to Claim 1, **characterized in that** the basic hydroxide is an alkali metal hydroxide.

3. Stabilized chlorite reagent according to Claim 1 or 2, **characterized in that** 10 to 1000 milliequivalents of the base and 100 to 1000 mMol of the chlorite are present per gram of the oxidic particles.

4. Stabilized chlorite reagent according to any one of Claims 1 to 3, **characterized in that** the chlorite particles, and the basic particles apart from the nanoscale particles, have a similar particle size in the range ± one power of ten of the median particle diameter.

5. Solids mixture for chlorine dioxide (ClO₂) generation on contacting the dry mixture with water, wherein the solids mixture contains the stabilized chlorite reagent according to any one of Claims 1 to 4, and also further dry solids that react with the chlorite and water with liberation of chlorine dioxide.

6. Solids mixture according to Claim 5, **characterized in that** the solids mixture, in addition to the chlorite reagent, contains at least one acid, at least one acid anhydride and/or at least one oxidizing agent, reducing agent or redox-system, each in solid form, and optionally additives and auxiliaries.

7. Solids mixture according to Claim 6, **characterized in that**, as additives, at least one additional salt is present, in particular selected from the group: salts with anions or cations that occur in components of the solids base mixture or of the chlorite reagent, reducing agents, redox catalysts, redox initiators, pH-regulating acidic or basic salts, buffering salts and salt mixtures.

8. Solids mixture according to Claim 6, **characterized in that**, as auxiliaries, inorganic colour pigments or organic dyes are added.

9. Solids mixture according to any one of Claims 5 to 8, **characterized in that** all solid particles, apart from the nanoscale particles, have a similar particle size in the range ± one power of ten of the respective median particle diameter.

10. Solids mixture according to any one of Claims 5 to 9, **characterized in that** it is present as a loose mixture or in compacted form, and in particular compressed to form tablets.

11. Solids mixture according to any one of Claims 5 to 10, **characterized in that** it contains at least one oxidizing agent of the peroxo group:
peroxomonosulfate (triple salt of KHSO₅, KHSO₄ and K₂SO₄), peroxodisulfate or alkaline earth metal hypochlorite.

12. Method for production of chlorine dioxide solutions, **characterized in that** the solids mixture according to any one of Claims 5 to 11 is mixed with water, in particular is added or charged in portions to an amount of water.

13. Method for treatment of water with chlorine dioxide, **characterized in that** the solids mixture according to any one of Claims 5 to 11 is added or charged in portions to an amount of water that is to be treated.

## Revendications

1. Réactif stabilisé à base de chlorite sous forme d'un mélange solide, qui contient au moins un chlorite et au moins un hydroxyde solide fortement basique, **caractérisé en ce que** le mélange solide contient en outre un agent de démoulage hautement dispersé de particules nanométriques d'oxyde inorganique présentant une surface BET entre 20 et 600 m²/g, qui est constitué par du dioxyde de silicium pyrogène.

2. Réactif stabilisé à base de chlorite selon la revendication 1, **caractérisé en ce que** l'hydroxyde basique est un hydroxyde de métal alcalin.

3. Réactif stabilisé à base de chlorite selon la revendication 1 ou 2, **caractérisé en ce qu'**il contient, par gramme de particules d'oxyde, 10 à 1000 milliéquivalents de la base et 100 à 1000 mM du chlorite.

4. Réactif stabilisé à base de chlorite selon l'une quelconque des revendications 1 à 3, **caractérisé en ce que** les particules de chlorite et les particules de base, en dehors des particules nanométriques, présentent des grosseurs de particule analogues dans le cadre de ± une puissance de dix du diamètre moyen de particule.

5. Mélange solide pour la production de dioxyde de chlore (ClO₂) par mise en contact du mélange sec avec de l'eau, le mélange solide contenant le réactif stabilisé à base de chlorite selon l'une quelconque des revendications 1 à 4 ainsi que d'autres solides secs qui réagissent avec le chlorite et l'eau avec libération de dioxyde de chlore.

6. Mélange solide selon la revendication 5, **caractérisé en ce que** le mélange solide contient, outre le réactif à base de chlorite, au moins un acide, au moins un anhydride d'acide et/ou au moins un agent d'oxydation, un agent de réduction ou un système redox, à chaque fois sous forme solide, et le cas échéant des additifs et des adjuvants.

7. Mélange solide selon la revendication 6, **caractérisé en ce qu'**au moins un sel supplémentaire est présent comme additif, en particulier choisi dans le groupe formé par : les sels présentant des anions ou des cations qui existent dans les constituants du mélange solide de base ou du réactif à base de chlorite, les agents de réduction, les catalyseurs redox, les initiateurs redox, les sels acides ou basiques régulant le pH, les sels tampon et les mélanges de sels tampon.

8. Mélange solide selon la revendication 6, **caractérisé en ce que** des pigments colorés inorganique ou des colorants organiques sont ajoutés comme adjuvants.

9. Mélange solide selon l'une quelconque des revendications 5 à 8, **caractérisé en ce que** toutes les particules solides, en dehors des particules nanométriques, présentent des grosseurs de particule analogues dans le cadre de ± une puissance de dix du diamètre moyen respectif de particule.

10. Mélange solide selon l'une quelconque des revendications 5 à 9, **caractérisé en ce qu'**il se trouve sous forme de mélange en vrac ou sous forme compactée et en particulier sous forme pressée en comprimés.

11. Mélange solide selon l'une quelconque des revendications 5 à 10, **caractérisé en ce qu'**il contient au moins un agent d'oxydation du groupe peroxo :
peroxomonosulfate (sel triple de KHSO₅, de KESO₄ et de K₂SO₄), peroxodisulfate ou hypochlorite de métal alcalino-terreux.

12. Procédé pour la préparation de solutions de dioxyde de chlore, **caractérisé en ce que** le mélange solide selon l'une quelconque des revendications 5 à 11 est mélangé avec de l'eau, en particulier ajouté par portions à ou dosé dans une quantité d'eau.

13. Procédé pour le traitement d'eau par du dioxyde de chlore, **caractérisé en ce que** le mélange solide selon l'une quelconque des revendications 5 à 11 est ajouté par portions à ou dosé dans une quantité d'eau à traiter.
